# FASCICULE DE BREVET EUROPEEN

(11) **EP 0 401 076 B1**
(45) Date de publication et mention de la délivrance du brevet: **02.08.1995**
(21) Numéro de dépôt: 90401288.7
(22) Date de dépôt: 15.05.1990
(51) Int. Cl.: H01M 10/30, H01M 2/16

(54) **Accumulateur nickel-cadmium à maintenance réduite**
Nickel-Cadmium-Akkumulator mit verminderter Wartung
Nickel-cadmium accumulator with reduced maintenance

(30) Priorité: 16.05.1989 FR 8906364; 08.01.1990 FR 9000114
(43) Date de publication de la demande: 05.12.1990
(73) Titulaire: SAFT (inscrite au Registre du Commerce sous le numéro 343 588 737), F-93230 Romainville (FR)
(72) Inventeur: Liska, Jean-Louis, F-33200 Bordeaux (FR); Madery, Claude, F-33160 Saint Médard en Jalles (FR)
(74) Mandataire: Weinmiller, Jürgen

(56) Documents cités:
- EP-A- 0 064 837
- EP-A- 0 196 416
- EP-A- 0 221 645
- FR-A- 1 371 155
- FR-A- 2 611 087
- FR-A- 2 628 892
- FR-A- 2 628 892
- PATENT ABSTRACTS OF JAPAN, vol. 13, no. 288 (E-781)[3636], 30 juin 1989;& JP-A-1 72 459 (NIPPON MUKI K.K.) 17-03-1989
- PATENT ABSTRACTS OF JAPAN, vol. 11, no. 304 (E-545)[2751], 3 octobre 1987;& JP-A-62 97 258 (YUASA BATTERY CO., LTD) 06-05-1987
- PATENT ABSTRACTS OF JAPAN, vol. 9, no. 56 (E-302)[1779], 12 mars 1985;& JP-A-59 196 556 (HIROYUKI KANAI) 07-11-1984
- JOURNAL OF POWER SOURCES, vol. 22, 1988, pages 243-259; D.F. PICKETT et al.:"Advanced nickel-cadmium batteries for geosynchronous spacecraft"
- PATENT ABSTRACTS OF JAPAN, vol. 9, no. 302 (E-362)[2025], 29 novembre 1985;& JP-A-60 140 661 (SHINKOUBE DENKI K.K.) 25-07-1985
- JOURNAL OF POWER SOURCES, vol. 19, 1987, pages 55-66; S. PETROVIC et al.: "Oxygen recombination rate on plastic-bonded cadium electrodes doped withnickel (II) hydroxide"
- "Oxygen recombination rate on plastic-bonded cadmium electrodes doped withnickel(II) hydroxide"

## Description

La présente invention concerne un accumulateur nickel-cadmium à maintenance réduite, destiné en particulier à des applications nécessitant de fortes puissances pendant de courtes durées, par exemple en aéronautique ou dans les alimentations de secours de certains équipements.

Pour ces applications on connaît un premier type d'accumulateur nickel-cadmium dit "ouvert" comprenant des électrodes positives et des électrodes négatives frittées, l'intervalle entre deux électrodes successives étant compris entre 0,15 mm et 0,4 mm.
Cet intervalle est comblé par un séparateur comprenant des feutres associés à une membrane en cellophane, en polyéthylène greffé ou en polypropylène microporeux.
L'ensemble des électrodes est enfermé dans un bac en matière plastique contenant une certaine quantité d'électrolyte libre ; la pression de fonctionnement est comprise entre 0,2 bar (0.2 x 10² KPa) et 0,7 (0.7 x 10² KPa) bar de pression relative, définie par une soupape.
Dans l'application aéronautique, chaque accumulateur déchargé en 15 secondes à 25° C présente une puissance massique de 400 à 700 Watts/kg.

Un tel accumulateur présente de manière très remarquable la caractéristique de fonctionnement suivante : lorsqu'on le charge à tension constante et à courant limité, sa tension s'accroît très brutalement au moment de la surcharge. Cet accroissement permet une autolimitation de la charge de l'accumulateur. Cette caractéristique de fonctionnement existe pour des charges à tension constante, quelle que soit la température dans un domaine compris entre - 20° C et + 60° C.
En outre cet accumulateur présente une haute fiabilité pendant toute sa durée de vie qui peut varier entre 5000 et 50 000 heures de fonctionnement, selon les conditions d'utilisation. Toutefois il présente l'inconvénient de consommer de l'eau en quantité proportionnelle à la surcharge qui lui est appliquée. Cette consommation d'eau doit être compensée par des ajouts périodiques d'eau déminéralisée, opération immobilisant la batterie et nécessitant une intervention humaine. Cette consommation est de l'ordre de 1 cm3 pour 3 Ah surchargés.

On connaît un second type d'accumulateur dit "ouvert" à électrodes positives frittées et à électrodes négatives dont la masse active est consolidée par un polymère. Ces dernières électrodes sont décrites en particulier dans le brevet français FR-A-2.586.407.
L'intervalle entre deux électrodes successives est supérieur à 0,4 mm et peut aller jusqu'à 1,5 mm selon les applications et les puissances massiques recherchées. Ces puissances massiques peuvent varier entre 50 et 200 W/kg.
Le séparateur peut être composé soit de feutres associés à une membrane, comme dans l'accumulateur du premier type, soit d'un intercalaire en matière plastique notamment pour des intervalles entre électrodes compris entre 0,8 mm et 1,5 mm. Cet accumulateur ne fonctionne pas sous pression. Il présente le même avantage que l'accumulateur du premier type du point de vue de l'autolimitation de la charge dans une vaste plage de température, et le même inconvénient du point de vue de la consommation d'eau. Par ailleurs il ne répond pas aux caractéristiques de puissance requises pour les applications aéronautiques.

On connaît aussi des accumulateurs nickel-cadmium étanches qui ont une consommation d'eau à peu près nulle pendant toute leur durée de vie. Un tel accumulateur comprend des électrodes positives frittées et des électrodes négatives consolidées par un polymère, séparées par une distance comprise entre 0,1 mm et 0,2 mm.
Le séparateur est un feutre en polyamide, en polypropylène, en polyéthylène, ou en un mélange de ces matières.
L'ensemble est monté dans un container métallique muni d'une soupape, la pression de fonctionnement étant habituellemet de 3 à 4 bars de pression relative.
Si, comme on l'a dit plus haut, les accumulateurs nickel-cadmium étanches n'ont pas l'inconvénient de consommer de l'eau, ils ne présentent pas la caractéristique de charge très avantageuse permettant l'autolimitation de cette charge. Leur utilisation dans les applications rappelées plus haut nécessiterait des systèmes sophistiqués de chargeurs avec un contrôle de charge indispensable permettant de vérifier que la pression n'est pas dépassée et qu'il n'y a pas de perte d'électrolyte : en effet une telle perte entraînerait rapidement la défaillance de l'accumulateur.

La présente invention a pour but de réaliser un accumulateur nickel-cadmium gardant les avantages des accumulateurs nickel-cadmium du premier type, mais ne nécessitant qu'un ajout d'eau à une fréquence réduite.

La présente invention a pour objet un accumulateur nickel-cadmium à maintenance réduite comprenant un ensemble d'électrodes positives, un ensemble d'électrodes négatives dont la masse active est consolidée par un polymère ou électro-déposée, caractérisé par le fait
- qu'il comprend des séparateurs constitués par des feutres en polyamide, en polypropylène, en polyéthylène seuls ou en mélange, sans membrane complémentaire,
- que la distance inter-électrodes est comprise entre 0,2 mm et 0,5 mm,
- que la pression interne est maintenue comprise entre 0 et 0,7 bars, de pression relative (0 - 0.7 x 10² KPa),
- et que ledit accumulateur contient de l'électrolyte libre au-dessus des électrodes, de manière à présenter, dans des limites de températures comprises entre
- 30° C et + 60° C, en cas de charge à tension constante, à courant limité ou à courant constant, une caractéristique de charge permettant la détection de la fin de la charge grâce l'existence d'une brutale montée de tension.

Avantageusement, la masse active des électrodes négatives qui se compose essentiellement d'un mélange de cadmium et d'oxyde de cadmium avec un liant, contient moins de 5 % de nickel métallique, et de préférence 0 %.

De préférence la distance inter-électrodes est comprise entre 0,2 mm et 0,3 mm.

Selon un mode de réalisation préférentiel ledit séparateur comporte des feutres composés de fibres de polypropylène et de polyamide présentant un diamètre compris entre 4 »m et 20 »m avec un grammage de l'ordre de 70 à 150 g/m². De préférence ce grammage est compris entre 90 et 120 g/m².

Dans un tel accumulateur, la consommation d'eau est divisée par un facteur allant de 2 à 20 selon la géométrie de l'accumulateur et les conditions de charge.

D'autres caractéristiques et avantages de la présente invention apparaîtront au cours de la description suivante de modes de réalisation donnés à titre illustratif mais nullement limitatif.

Dans le dessin annexé :
- La figure 1 montre des courbes de tension V d'accumulateurs de l'art antérieur et d'un accumulateur selon l'invention en fonction du temps t, au cours d'une même charge à tension constante.
- La figure 2 présente des courbes illustrant la consommation d'eau des accumulateurs de la figure 1 en cours de surcharge.
- La figure 3 montre les courbes de tension V des accumulateurs de l'art antérieur de la figure 1 et celle d'une variante d'accumulateur selon l'invention en fonction du temps t, au cours d'une même charge à tension constante.
- La figure 4 présente des courbes illustrant la consommation d'eau des accumulateurs de la figure 3 en cours de surcharge.

On va comparer trois accumulateurs A, B, C, de l'art antérieur et un accumulateur D₁ selon l'invention.

L'accumulateur A de l'art antérieur est un accumulateur ouvert nickel-cadmium pour application aéronautique à électrodes positives frittées et à électrodes négatives frittées. L'intervalle entre deux électrodes successives est de 0,25 mm. Le séparateur est formé de feutres associés à une membrane en polyéthylène greffé. La pression de fonctionnement est de 0,4 bars (0.4 x 10² KPa) de pression relative.

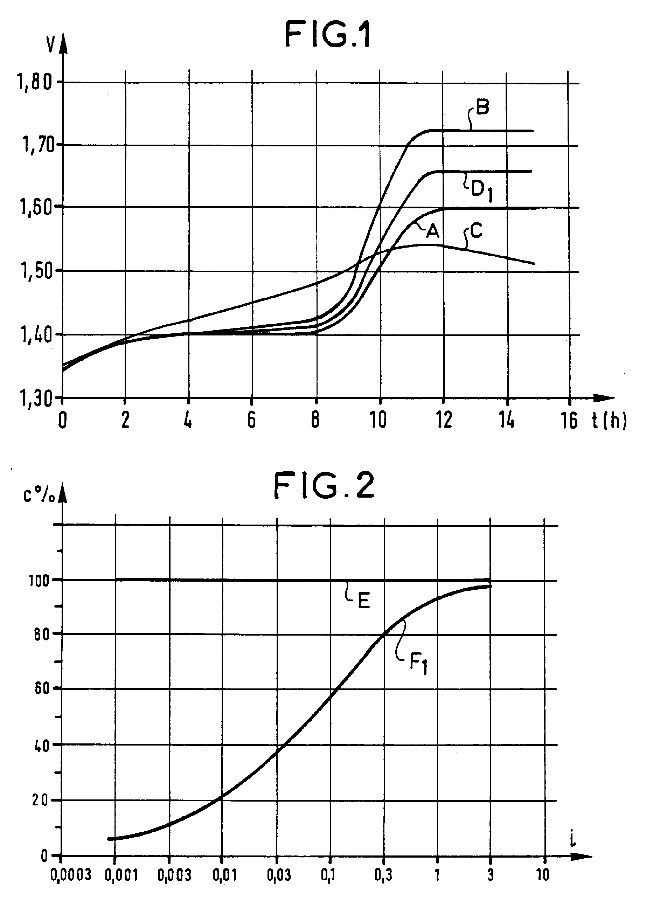

La figure 1 montre la courbe A de tension V (en volts) en fonction un temps t (en heures) de cet accumulateur A en cours de charge, le courant constant de charge étant à 0,1 Cn (capacité nominale) à 20° C. On remarque la brutale augmentation de la tension de l'accumulateur après 9 heures de charge.

Dans la figure 2 la courbe E montre la consommation d'eau c en pourcentage de consommation théorique de l'accumulateur A en fonction de l'intensité de surcharge i exprimée en fraction de Cn.

L'accumulateur B de l'art antérieur est un accumulateur ouvert nickel-cadmium ayant des applications industrielles autres que l'aéronautique.
Il comporte des électrodes positives frittées et des électrodes négatives consolidées par polymère. L'intervalle entre deux électrodes est de 0,50 mm. Le séparateur est formé de feutres associés à une membrane comme dans l'accumulateur A.
L'accumulateur B est chargé dans les mêmes conditions que l'accumulateur A. La courbe B de la figure 1 montre les variations de la tension V de cet accumulateur en fonction du temps.
On observe encore une brutale augmentation de la tension de l'accumulateur B après 9 heures de charge à tension constante.
Comme l'accumulateur A, l'accumulateur B consomme de l'eau en cas de surcharge, conformément à la courbe E de la figure 2.

L'accumulateur C de l'art antérieur est un accumulateur étanche nickel-cadmium. Ses électrodes positives sont frittées et ses électrodes négatives sont consolidées par polymère. L'intervalle entre deux électrodes, égal à 0,20 mm, est rempli d'un feutre en polypropylène. L'électrolyte est limité et la pression de fonctionnement est de 4 bars de pression relative.
L'accumulateur C est chargé dans les mêmes conditions que les accumulateurs A et B ; la courbe C de la figure 1 montre sa courbe de tension. Contrairement aux accumulateurs A et B, il est clair que cette tension ne présente aucun accroissement brutal en fin de charge. Par contre la consommation d'eau est quasiment nulle.

L'accumulateur D₁ selon l'invention comprend des électrodes positives et négatives du même genre que celles de l'accumulateur B. Toutefois la masse active négative qui se compose essentiellement d'un mélange de cadmium et d'oxyde de cadmium avec un liant, est exempte de nickel métallique. La distance inter-électrodes est de 0,3 mm.
Le séparateur est constitué uniquement de feutres composés de fibres en polypropylène et polyamide présentant un diamètre de 4 »m à 20 »m. Le grammage de ce séparateur est de 120 g/m2 environ.
L'électrolyte est libre au-dessus des électrodes. La pression de fonctionnement est 0,4 bars (0.4 x 10² KPa) de pression relative.

Cet accumulateur D₁ est chargé dans les mêmes conditions que précédemment. La courbe D₁ de la figure 1 fait apparaître un brusque accroissement de tension après 9 heures de charge, comme pour les accumulateurs A et B. Par contre la consommation d'eau, illustrée par la courbe F₁ de la figure 2, est nettement inférieure à celle des deux accumulateurs précédents.
Comme la courbe D₁ montre une possibilité d'autolimitation de la charge, l'intensité de surcharge i (voir figure 2) peut être faible et la consommation d'eau peut être réduite jusque dans un rapport 10.

En plus de cet avantage l'accumulateur D₁ garde la possibilité d'être chargé à tension constante à des températures comprises entre - 30° C et + 60° C, sur des périodes pouvant aller jusqu'à 24 heures sans risque d'emballement thermique.

Il a des caractéristiques de décharge identiques à celles d'un accumulateur ouvert connu de même géométrie, ainsi qu'une durée de vie identique.

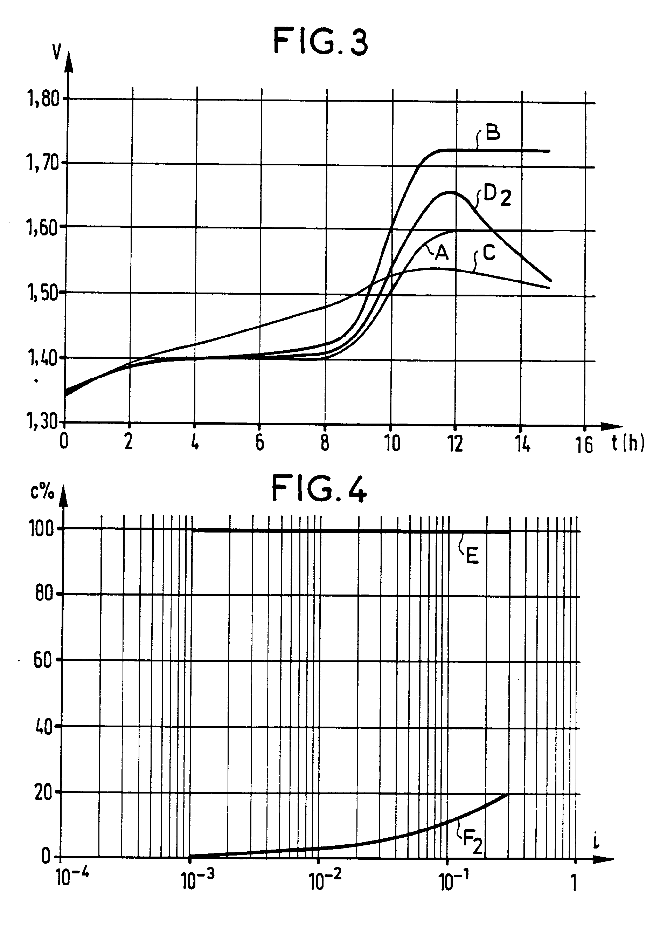

Dans la figure 3, on retrouve les courbes A, B, C de l'art antérieur analogues à celles de la figure 1 et une courbe D₂ relative à une variante d'accumulateur selon l'invention.

Cet accumulateur D₂ comprend des électrodes positives et négatives du même genre que celles de l'accumulateur B. Toutefois la masse active négative qui se compose essentiellement d'un mélange de cadmium et d'oxyde de cadmium avec un liant, est exempte de nickel métallique; la distance inter-électrodes est de 0,3 mm.
Le séparateur est constitué uniquement de feutres composés de fibres en polypropylène ou polyamide comportant une majorité de fibres ayant un diamètre de 5 » m. Le grammage de ce séparateur est de 100 g/m² environ. L'électrolyte est libre. La pression de fonctionnement est 0,4 bars (0.4 x 10² KPa) de pression relative.

Cet accumulateur D₂ est chargé dans les mêmes conditions que précédemment. La courbe D₂ de la figure 3 fait apparaître un brusque accroissement de tension après 9 heures de charge, comme pour les accumulateurs A et B, suivi d'une diminution progressive. Par contre la consommation d'eau, illustrée par la courbe F₂ de la figure 4 est très nettement inférieure à celle des deux accumulateurs précédents.
Elle permet une autonomie de trois à cinq ans, sans réajustement des niveaux d'électrolyte, par exemple dans les batteries d'aéronefs.

La courbe D₂ montre une possibilité de détection aisée de la fin de charge par mesure de la montée de la tension de l'accumulateur.

En plus de cet avantage l'accumulateur D₂ garde la possibilité d'être chargé à des températures comprises entre - 30° C et + 60° C.

L'accumulateur D₂ a des caractéristiques de décharge identiques à celles d'un accumulateur ouvert connu de même géométrie, ainsi qu'une durée de vie identique.

Selon un autre exemple, la distance inter-électrodes est égale à 0,5 mm et le grammage du feutre du séparateur est de 150 g/m² ; la caractéristique de charge de l'accumulateur réalisé est analogue à celle de l'accumulateur D₂.

Par ailleurs, les électrodes positives d'un accumulateur selon l'invention peuvent être des électrodes à support en mousse ou en fibres, ou des électrodes à pochettes.

Des batteries d'accumulateurs selon l'invention dont la gamme de capacités est comprise entre 5 et 1000 Ah trouvent des applications dans le démarrage nécessitant de hautes puissances, dans le secours d'équipements nécessitant des pointes de courant pendant de courtes durées ; elles peuvent être également utilisées pour le démarrage des groupes d'alimentation de secours des centraux téléphoniques etc...

## Revendications

1. Accumulateur nickel-cadmium à maintenance réduite comprenant un ensemble d'électrodes positives, un ensemble d'électrodes négatives dont la masse active est consolidée par un polymère ou électro-déposée, caractérisé par le fait
- qu'il comprend des séparateurs constitués par au moins un feutre en un matériau choisi parmi un polyamide, le polypropylène, le polyéthylène, seul ou en mélange, sans membrane complémentaire,
- que la distance inter-électrodes est comprise entre 0,2 mm et 0,5 mm,
- que la pression interne est maintenue comprise entre 0 et 0,7 bars de pression relative (0 à 0.7 x 10² KPa),
- et que ledit accumulateur contient de l'électrolyte libre au-dessus des électrodes,
de manière à présenter, dans des limites de températures comprises entre - 30° C et + 60° C, en cas de charge à tension constante, à courant limité ou à courant constant, une caractéristique de charge permettant la détection de la fin de la charge grâce à l'existence d'une brutale montée de tension.

2. Accumulateur nickel-cadmium selon la revendication 1, caractérisé par le fait que la distance inter-électrodes est comprise entre 0,2 mm et 0,3 mm.

3. Accumulateur nickel-cadmium selon l'une des revendications 1 et 2, caractérisé par le fait que ledit séparateur comporte des fibres de polypropylène et de polyamide présentant un diamètre compris entre 4 »m et 20 »m avec un grammage compris entre 70 et 150 g/m².

4. Accumulateur nickel-cadmium selon l'une des revendications 1 à 3, caractérisé par le fait que la masse active des électrodes négatives contient moins de 5 % de nickel métallique.

5. Accumulateur nickel-cadmium selon la revendication 4, caractérisé par le fait que ladite masse active des électrodes négatives est exempte de nickel métallique.

6. Accumulateur nickel-cadmium à maintenance réduite comprenant un ensemble d'électrodes positives, un ensemble d'électrodes négatives dont la masse active est consolidée par un polymère, caractérisé par le fait
- qu'il comporte des séparateurs constitués par au moins un feutre en fibres de polyamide et de polypropylène, sans membrane complémentaire, ces fibres présentant un diamètre compris entre 4 »m et 20 »m avec un grammage de l'ordre de 120 g/m²,
- que la distance inter-électrodes est comprise entre 0,2 mm et 0,3 mm,
- que la pression interne est maintenue comprise entre 0 et 0,7 bars de pression relative (0 à 0.7 x 10² KPa),
et que ledit accumulateur contient de l'électrolyte libre au-dessus des électrodes,
de manière à présenter, dans des limites de températures comprises entre - 30° C et + 60° C, en cas de charge à tension constante, une caractéristique de charge permettant l'autolimitation de cette charge.

7. Accumulateur nickel-cadmium à maintenance réduite comprenant un ensemble d'électrodes positives, un ensemble d'électrodes négatives dont la masse active est consolidée par un polymère ou électro-déposée caractérisé par le fait
- qu'il comprend des séparateurs constitués par au moins un feutre en un matériau choisi parmi un polyamide, le polypropylène, le polyéthylène, seul ou en mélange, sans membrane complémentaire,
- que la distance inter-électrodes est comprises entre 0,2 mm et 0,3 mm,
- que lesdits feutres se composent de fibres dont la majorité présente un diamètre de 5 »m avec un grammage compris entre 90 et 120 g/m²,
- que la pression interne est maintenue comprise entre 0 et 0,7 bars de pression relative (0 à 0.7 x 10² KPa),
- et que ledit accumulateur contient de l'électrolyte libre au-dessus des électrodes,
de manière à présenter, dans des limites de températures comprises entre -30° C et + 60° C, une caractéristique de charge permettant la détection de la fin de charge par mesure de la montée de la tension.

## Patentansprüche

1. Nickel-Kadmium-Akkumulator mit reduzierter Wartung, der mehrere positive Elektroden und mehrere negative Elektroden aufweist, deren aktive Masse durch ein Polymer verstärkt oder elektrolytisch aufgebracht ist, dadurch gekennzeichnet,
- daß er Separatoren aufweist, die von mindestens einem Filz aus Polyamid, aus Polypropylen, aus Polyäthylen, allein oder in Mischung, ohne zusätzliche Membran gebildet werden,
- daß der Abstand zwischen den Elektroden zwischen 0,2 mm und 0,5 mm liegt,
- daß ein Innendruck zwischen 0 und 0,7 Bar (0 bis 0,7 · 10² kPa) relativen Drucks aufrechterhalten wird,
- und daß der Akkumulator freien Elektrolyt oberhalb der Elektroden aufweist,
um im Temperaturbereich zwischen -30°C und +60°C im Fall einer Ladung mit konstanter Spannung, mit begrenztem Strom oder konstantem Strom eine Ladungskennlinie aufzuweisen, die die Erfassung des Endes der Ladung aufgrund eines plötzlichen Anstiegs der Spannung ermöglicht.

2. Nickel-Kadmium-Akkumulator nach Anspruch 1, dadurch gekennzeichnet, daß der Abstand zwischen den Elektroden zwischen 0,2 und 0,3 mm liegt.

3. Nickel-Kadmium-Akkumulator nach einem der Ansprüche 1 und 2, dadurch gekennzeichnet, daß der Separator Fasern aus Polypropylen und Polyamid enthält, deren Durchmesser zwischen 4 »m und 20 »m liegt, mit einem Flächengewicht in der Größenordnung zwischen 70 und 150 g/m².

4. Nickel-Kadmium-Akkumulator nach einem der Ansprüche 1 bis 3, dadurch gekennzeichnet, daß die aktive Masse der negativen Elektroden weniger als 5% metallisches Nickel enthält.

5. Nickel-Kadmium-Akkumulator nach Anspruch 4, dadurch gekennzeichnet, daß die aktive Masse der negativen Elektroden kein metallisches Nickel enthält.

6. Nickel-Kadmium-Akkumulator mit reduzierter Wartung, der mehrere positive Elektroden und mehrere negative Elektroden aufweist, deren aktive Masse mit einem Polymer verstärkt ist, dadurch gekennzeichnet,
- daß er Separatoren aufweist, die von mindestens einem Filz aus Polyamid- und Polypropylenfasern ohne zusätzliche Membran gebildet werden, wobei diese Fasern einen Durchmesser zwischen 4 »m und 20 »m aufweisen und der Filz ein Flächengewicht von etwa 120 g/m² besitzt,
- daß der Abstand zwischen den Elektroden zwischen 0,2 mm und 0,3 mm liegt,
- daß ein Innendruck zwischen 0 und 0,7 Bar (0 bis 0,7 · 10² kPa) relativen Drucks aufrechterhalten wird, und daß der Akkumulator freien Elektrolyt oberhalb der Elektroden aufweist,
um in Temperaturgrenzen zwischen -30°C und +60°C im Fall einer Ladung mit konstanter Spannung eine Ladungskennlinie aufzuweisen, die die Selbstbegrenzung der Ladung erlaubt.

7. Nickel-Kadmium-Akkumulator mit reduzierter Wartung, der mehrere positive Elektroden und mehrere negative Elektroden aufweist, deren aktive Masse mit einem Polymer verstärkt oder elektrolytisch aufgebracht ist, dadurch gekennzeichnet,
- daß er Separatoren aufweist, die von mindestens einem Filz aus Polyamid, Polypropylen, Polyäthylen, allein oder in Mischung, ohne zusätzliche Membran gebildet werden,
- daß der Abstand zwischen den Elektroden zwischen 0,2 mm und 0,3 mm liegt,
- daß die Filze aus Fasern bestehen, von denen die Mehrheit einen Durchmesser von 5 »m besitzt, wobei die Filze ein Flächengewicht zwischen 90 und 120 g/m² haben,
- daß ein Innendruck zwischen 0 und 0,7 Bar (0 bis 0,7 · 10² kPa) relativen Drucks aufrechterhalten wird, und daß der Akkumulator freien Elektrolyt oberhalb der Elektroden aufweist,
um in Temperaturgrenzen zwischen -30°C und +60°C eine Ladungskennlinie aufzuweisen, die die Erfassung des Endes der Ladung durch Messung des Spannungsanstiegs erlaubt.

## Claims

1. A reduced maintenance nickel-cadmium storage cell including a set of positive electrodes and a set of negative electrodes in which the active mass is consolidated by a polymer or is electro-deposited, the cell being characterized by the facts that:
it includes separators constituted by at least one felt made of a material selected from a polyamide, polypropylene, polyethylene, individually or mixed together, and without an additional membrane;
the inter-electrode distance is in the range 0.2 mm and 0.5 mm;
the internal pressure is maintained at a relative pressure in the range 0 bars to 0.7 bars (0 × 10² KPa to 0.7 × 10² KPa); and
said accumulator contains free electrolyte above the electrodes;
thereby presenting a charging characteristic when charging at constant voltage, at limited current or at constant current and in the temperature range of -30°C to +60°C which makes it possible to detect the end of charging because of the existence of a sudden increase in voltage.

2. A nickel-cadmium cell according to claim 1, characterized by the fact that the inter-electrode distance is in the range 0.2 mm to 0.3 mm.

3. A nickel-cadmium cell according to claim 1 or 2, characterized by the fact that said separator includes polyamide and polypropylene fibers having a diameter lying in the range 4 »m to 20 »m, with the weight of the separator lying in the range 70 g/m² to 150 g/m².

4. A nickel-cadmium cell according to any one of claims 1 to 3, characterized by the fact that the active mass of the negative electrodes contains less than 5% metallic nickel.

5. A nickel-cadmium cell according to claim 4, characterized by the fact that the active mass of the negative electrodes is free from metallic nickel.

6. A reduced maintenance nickel-cadmium cell including a set of positive electrodes, and a set of negative electrodes in which the active mass is consolidated by a polymer, the cell being characterized by the facts that:
it includes separators constituted by at least one felt of polypropylene and polyamide fibers, without an additional membrane, the weight of the felt being about 120 g/m², and said fibers having a diameter in the range 4 »m to 20 »m;
the inter-electrode distance is in the range 0.2 mm to 0.3 mm;
the internal pressure is maintained at a relative pressure in the range 0 bars to 0.7 bars (0 × 10² KPa to 0.7 × 10² KPa); and
said cell contains free electrolyte above the electrodes;
thereby presenting a charging characteristic during constant voltage charging in the temperature range -30°C to +60°C that enables said charging to be self-limiting.

7. A reduced maintenance nickel-cadmium storage cell including a set of positive electrodes, and a set of negative electrodes in which the active mass is consolidated by a polymer or is electro-deposited, the cell being characterized by the facts that:
it includes separators constituted by at least one felt made of a substance selected from a polyamide, polypropylene, polyethylene, individually or mixed together, and without an additional membrane;
the inter-electrode distance is in the range 0.2 mm to 0.3 mm;
said felts have a weight lying in the range 90 g/m² to 120 g/m² and are made of fibers, the majority of which have a diameter of 5 »m;
the internal pressure is maintained at a relative pressure in the range 0 bars to 0.7 bars (0 × 10² KPa to 0.7 × 10² KPa); and
said cell contains free electrolyte above the electrodes;
thereby presenting a charging characteristic when charging in the temperature range -30°C to +60°C enabling the end of charging to be detected by measuring the rise in voltage.
